# EUROPÄISCHE PATENTSCHRIFT

(11) **EP 1 116 435 B1**
(45) Veröffentlichungstag und Bekanntmachung des Hinweises auf die Patenterteilung: **16.10.2002**
(21) Anmeldenummer: 01100053.6
(22) Anmeldetag: 09.01.2001
(51) Int. Cl.: A01G 23/04

(54) **Vorrichtung zum Verpflanzen von Bäumen oder Sträuchern**
Device for transplanting trees or bushes
Dispositif pour transplanter des arbres ou des buissons

(30) Priorität: 13.01.2000 DE 10001078
(43) Veröffentlichungstag der Anmeldung: 18.07.2001
(73) Patentinhaber: Opitz, Dieter, 91180 Heideck (DE)
(72) Erfinder: Opitz, Dieter, 91180 Heideck (DE)
(74) Vertreter: Sasse, Volker, Dipl.-Ing.

(56) Entgegenhaltungen:
- DE-A- 2 421 624
- DE-A- 3 109 727
- FR-A- 2 278 853
- GB-A- 991 295
- US-A- 4 449 309

## Beschreibung

Die Erfindung betrifft eine Vorrichtung zum Verpflanzen von Bäumen oder Sträuchern gemäß dem Oberbegriff des Patentanspruchs 1.

Aus der DE 31 09 727 A1 ist ein Baumverpflanzungsgerät bekannt, das zwei etwa viertelkugelförmige Grabspaten aufweist. Diese Grabspaten sind gegeneinander verschieb- und verschwenkbar, wobei sie sich in einer geschlossenen Lage zu einer Halbkugelschale ergänzen. Die in der offenen Ausgangslage nach unten gerichteten Stirnkanten dieser Grabspaten sind zickzack-förmig ausgebildet, so daß diese mit einer Reihe von Zähnen ausgebildet sind. Diese Zähne weisen Schliffflächen auf, deren äußere Kanten zu Schneiden geformt sind. Diese Schneiden erleichtern das Eindringen der Grabspaten in den Boden, insbesondere wenn dabei Wurzeln des zu verpflanzenden Baumes durchtrennt werden müssen. Obwohl sich diese Vorrichtung in der Praxis bewährt hat, gibt sie Anlaß zu weiteren Verbesserungen. Insbesondere hat sich herausgestellt, daß die Zähne abbrechen können, wenn sie gegen im Erdreich eingelagerte Steine gedrückt werden.

Aus der DE 39 43 053 A1 ist ein Einzelballen-Unterschneide- und Aushebegerät bekannt, das im wesentlichen von zwei schmalen Schneiden gebildet ist, die um eine gemeinsame Achse verschwenkbar gehalten sind. Diese Schneiden besitzen sinusartig geformte Schliffflächen.

Aus der DE 30 08 009 A1 ist ein Pflanzen-Ausgrabungsgerät bekannt, das mit Schneiden versehene Spaten aufweist. Diese Spaten sind gegeneinander verschwenkbar und überlappen sich in einer geschlossenen Stellung teilweise.

Der Erfindung liegt daher die Aufgabe zugrunde, eine Vorrichtung der eingangs genannten Art zu schaffen, die beim Herausheben eines Baumes oder Strauches wirkungsvoll diese Wurzeln durchtrennen kann, wobei die Reparaturanfälligkeit vermindert werden soll.

Diese Aufgabe wird erfindungsgemäß mit den Merkmalen des Patentanspruchs 1 oder 2 gelöst.

Die Vorrichtung gemäß Anspruch 1 weist zwei gegeneinander verstellbare Spaten auf, mit denen der zu verpflanzende Baum ausgegraben wird. Diese Spaten sind in eine offene Lage bringbar, in der sie zumindest um den Durchmesser des Baumstammes beabstandet sind. Damit können die Spaten am Baumstamm vorbei in eine Lage gebracht werden, in der sie den zu verpflanzenden Baum bzw. Strauch umfassen. Die Spaten weisen Schneiden auf, die in dieser offenen Lage nach unten gerichtet sind. Die Spaten stehen außerdem mit einem Stellantrieb in Wirkverbindung, der diese relativ zueinander verstellt und verschwenkt. Dabei werden die Spaten zunächst derart verstellt, daß sich die Schneiden der Spaten zu einer den zu verpflanzenden Baum oder Strauch allseits im wesentlichen umfassenden Kreisform ergänzen. Anschließend werden die Spaten um eine annähernd durch den gemeinsamen Mittelpunkt verlaufenden Achse relativ zueinander verschwenkt, so daß die Spaten rings um den zu verpflanzenden Baum in den Boden eindringen. Es spielt dabei keine Rolle, ob zwei oder mehr Spaten eingesetzt werden, wichtig ist lediglich, daß sich die einzelnen Spaten in einer geschlossenen Lage im wesentlichen zu einer Teilkugelschale ergänzen. Vorzugsweise ergänzen sich die Spaten zu einer Halbkugelschale, was sich in der Praxis als völlig ausreichend erwiesen hat. Aufgrund der besonderen Formgebung der Spaten verlaufen deren Flächen stets im Bereich des Schnittes, der von den Schneiden erzeugt wird. Dies gewährleistet, daß die Spaten mit relativ geringem Kraftaufwand durch das Erdreich bewegt werden können. Beim Verpflanzen von Bäumen oder Sträuchern kommt es jedoch immer wieder vor, daß die Spaten gegen Steine gedrückt werden, die im Erdboden eingebettet sind. Um den von derartigen Steinen hervorgerufene Schäden an den Schneiden der Spaten klein zu halten, wird vorgeschlagen, die Schneiden in Form eines Wellenschliffes auszubilden. Der Wellenschliff weist abwechselnde Kanten bildende Erhöhungen und konkave Vertiefungen der Schlifffläche auf, so daß die Schneide im Querschnitt betrachtet besonders spitzwinkelig ausgebildet werden kann, wobei aufgrund der Erhöhungen trotzdem eine ausreichende Stabilität der Schneide gegeben ist. Ggf. könnten die Kanten auch eine Fase oder Rundung aufweisen, ohne die Funktion des Wellenschliffes zu beeinträchtigen. Der Wellenschliff hat außerdem den Vorteil, daß die Kontur der Schneide nur geringfügig gewellt ist, wobei die vorstehenden und damit bruchgefährdeten Abschnitte der Schneide im Bereich von Materialverdickungen vorgesehen sind. Die Schneide ist demnach hoch belastbar, wobei trotzdem der Boden nur einen geringen Widerstand auf diese ausübt, so daß der Spaten bei leichtem Eindringen in den Boden eine erhöhte Bruchsicherheit aufweist.

Bei einer Vorrichtung gemäß Anspruch 2 sind die Schneiden wechselseitig an den Spaten vorgesehen. Insbesondere bei Verwendung von nur zwei Spaten ist die Schneide an einem der Spaten innenseitig und am anderen außenseitig vorgesehen. Bei einer ungeraden Anzahl von Spaten ist es allerdings erforderlich, diese zur Hälfte mit innenliegender und zur Hälfte mit außenliegender Schneide vorzusehen, wobei der Übergang zwischen beiden Schneiden an der unteren Spitze der Spaten vorgesehen ist. In der geschlossenen Lage überlappen sich die Schliffflächen der Schneiden teilweise, so daß jeweils die Schliffflächen der Spaten aneinander zur Anlage kommen. Auf diese Weise ist gewährleistet, daß die Schneiden auch dickere Wurzeln des zu verpflanzenden Baumes korrekt durchtrennen können, insbesondere wenn sich diese im Bereich der geschlossenen Endlage der Spaten befinden.

Um die Bruchgefahr der Schneide weiter zu verringern, ist es gemäß Anspruch 3 günstig, die Erhöhungen des Wellenschliffes endseitig zu kappen. Dadurch wird die Welligkeit der Kontur der Schneide weiter reduziert, wobei die vorstehenden Teile der Schlifffläche im wesentlichen parallel zur Schneidenkontur geformt sind. Die Kontur der Schneide weist insbesondere keine vorstehenden Ecken auf, die einer erhöhten Bruchgefahr ausgesetzt sind. Um die Schnittwirkung der Schneide nicht wesentlich zu beeinträchtigen, werden die Erhöhungen durch einen Gegenschliff gekappt. Die vom Gegenschliff erzeugte Schneidenkontur ist demnach in Bewegungsrichtung der Spaten gesehen spitzwinkelig, so daß auch dickere Wurzeln problemlos durchtrennt werden können.

Gemäß Anspruch 4 ist es günstig, die Erhöhungen der Schneiden zueinander versetzt anzuordnen. Damit greifen die Erhöhungen einer Schneide in die Vertiefungen der gegenüberliegenden Schneide, so daß sich die Schneiden nicht gegenseitig behindern. Damit kann eine relativ große Überlappung der beiden Schneiden in der geschlossenen Lage der Spaten erreicht werden, so daß nach unten gerichtete Wurzeln des zu verpflanzenden Baumes zuverlässig durchtrennt werden.

Sind die Abstände der Erhöhungen des Wellenschliffes der Schneiden im Verhältnis zur Spatenstärke zu groß, so hat die Schneide im Bereich der Vertiefungen nicht mehr die erforderliche Stabilität, so daß sie gegebenenfalls von im Erdreich eingebetteten Steinen beschädigt werden könnte. Sind die Abstände der Erhöhungen dagegen zu klein, so üben die Erhöhungen beim Eindringen des Spatens in das Erdreich einen übermäßig großen Widerstand auf diesen aus. Bei einer Spatenstärke von ca. 10 mm hat sich gemäß Anspruch 5 ein Abstand der Erhöhungen voneinander zwischen 15 und 60 mm bewährt, wobei vorzugsweise ein Abstand von ca. 30 mm gewählt wird.

Grundsätzlich könnte die Schneide einstückig mit dem Spaten verbunden sein. Gemäß Anspruch 6 ist es jedoch vorteilhaft, die Schneide in einem gesonderten Teil vorzusehen, das am Spaten gehalten ist. Dieses gesonderte Teil besitzt eine größere Härte als der Spaten, so daß die Schneide besonders langlebig ist. Dem gegenüber besitzt der Spaten eine ausreichende Elastizität, so daß er einem im Erdreich eingebetteten Stein gegebenenfalls ausweichen kann, ohne die Schneide übermäßig zu belasten.

Zur Festlegung des gesonderten Teils am Spaten hat es sich gemäß Anspruch 7 bewährt, beide Teile miteinander zu verschweißen. Die Verbindung zwischen dem gesonderten Teil und dem Spaten ist in diesem Fall hoch belastbar, wobei keinerlei Befestigungsmittel innen- oder außenseitig über den Spaten überstehen. Derartige überstehende Befestigungsmittel hätten den Nachteil, daß sie beim Eindringen des Spatens in den Boden zusätzlichen Widerstand auf diesen ausüben und damit auch einer erhöhten Belastung ausgesetzt sind.

Grundsätzlich könnte das gesonderte Teil stumpf auf die Stirnfläche des Spatens aufgesetzt werden. Gemäß Anspruch 8 ist es jedoch vorteilhafter, die Stirnfläche der Schneide stufenförmig zu verjüngen, wobei das Ende des Spatens korrespondierend hierzu ausgebildet ist. Vorzugsweise ist das gesonderte Teil am Spaten mittels einer Nut-Feder-Profilierung gehalten, die seitliche Kräfte aufnehmen kann. Auf das gesonderte Teil ausgeübte Druckkräfte werden direkt von der Stirnfläche des Spatens aufgenommen, so daß zusätzliche Haltemittel grundsätzlich entfallen könnten. Diese Haltemittel können daher sehr schwach und damit raumsparend eingesetzt werden, so daß keine Teile über den Spaten überstehen. Beispielsweise könnte das gesonderte Teil am Spaten durch Punktschweißungen oder Senkkopfschrauben gehalten sein.

Ist das gesonderte Teil gemäß Anspruch 9 durch lösbare Haltemittel mit dem Spaten verbunden, so vereinfacht sich der Austausch dieser gesonderten Teile, wenn sich die Schneide zu sehr abgenützt hat. Vorzugsweise werden als Haltemittel Senkkopfschrauben eingesetzt, die in keiner Weise über den Spaten überstehen.

Schließlich ist es gemäß Anspruch 10 vorteilhaft, am Spaten mehrere, mit Schneiden versehene Teile zu halten, so daß nur jenes Segment ausgetauscht werden muß, das im Einsatz beschädigt wurde. Damit reduzieren sich die Kosten für die Instandhaltung der Vorrichtung.

Der Erfindungsgegenstand wird beispielhaft anhand der Zeichnung näher erläutert, ohne den Schutzumfang zu begrenzen.

Es zeigt:
- Figur 1: eine Vorderansicht einer Vorrichtung zum Verpflanzen von Bäumen oder Sträuchern,
- Figur 2: eine räumliche Ansicht einer alternativen Ausführungsform der Schneide der Vorrichtung gemäß Figur 1,
- Figur 3: eine Schnittdarstellung durch einen Spaten der Vorrichtung gemäß Figur 1 entlang der Schnittlinie III/III mit der Schneide gemäß Figur 2 und
- Figur 4: eine Schnittdarstellung einer weiteren alternativen Ausführungsform.

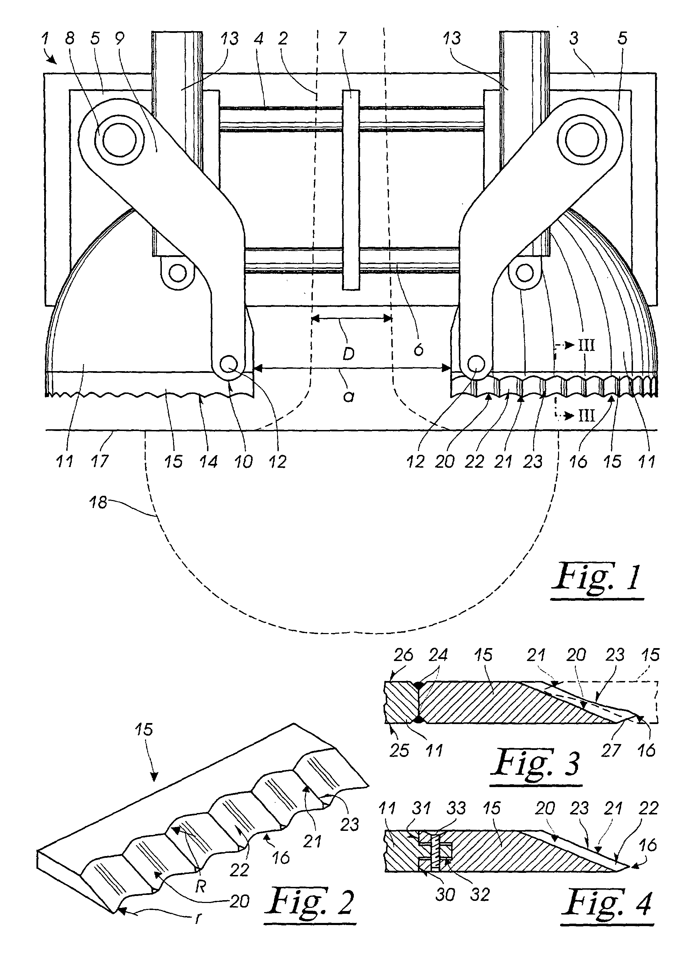

Eine Vorrichtung 1 zum Verpflanzen von Bäumen 2 bzw. Sträuchern gemäß Figur 1 weist einen Rahmen 3 auf. An diesem Rahmen 3 ist eine Führung 4 gehalten, entlang der zwei Schiebeschlitten 5 verschiebbar gehalten sind. Die Schiebeschlitten 5 sind mittels Stellantrieben 6 in Form von Hydraulikzylindern verschiebbar. Diese Hydraulikzylinder 6 sind an einer mittigen Halterung 7 des Rahmens 3 abgestützt und werden derart angesteuert, daß die beiden Schiebeschlitten 5 aufeinander zu- bzw. voneinander wegbewegt werden.

An jedem der Schiebeschlitten 5 ist ein Tragrohr 8 gehalten, mit dem ein Winkel 9 drehfest verbunden ist. An dem dem Tragrohr 8 gegenüberliegenden Ende 10 des Winkels 9 ist ein Spaten 11 angelenkt. Der Spaten 11 hat die Form einer Kugelteilschale, wobei der Spaten 11 in etwa ein Achtel einer vollen Kugelschale umfaßt. Zur Verschwenkung des Spatens 11 um ein Schwenklager 12 des Winkels 9 greift am Spaten 11 ein Stellantrieb 13 an, der am Schiebeschlitten 5 schwenkbar abgestützt ist. Dieser Stellantrieb 13 ist wiederum in Form eines Hydraulikzylinders ausgebildet.

Am freien Ende 14 des Spatens 11, das in der in Figur 1 dargestellten offenen Lage nach unten gerichtet ist, ist ein gesondertes Teil 15 gehalten, das eine Schneide 16 aufweist. Dieses gesonderte Teil 15 ist mit dem Spaten 11 verschweißt und weist gegenüber dem Spaten 11 eine größere Härte auf. An dem in der Figur 1 links dargestellten Spaten 11 ist die Schneide 16 innenseitig und am rechts dargestellten Spaten 11 außenseitig vorgesehen.

Die Schneide 16 weist konkav gerundete Vertiefungen 20 auf, zwischen denen sich Erhöhungen 21 befinden. Die Vertiefung 20 besitzt eine konkave, zylindrische Begrenzungsfläche 22, wobei die Erhöhungen 21 gerade Kanten 23 aufweisen. Durch diese besondere Ausbildung der Schneide 16 in Form eines Wellenschliffes ergibt sich ein geringer Widerstand des Spatens 11 im Boden 17 und eine hohe Stabilität der Schneide 16.

Im Folgenden wird das Verfahren zum Verpflanzen von Bäumen 2 oder Sträuchern unter Zuhilfenahme der Vorrichtung 1 gemäß Figur 1 erläutert. Zunächst werden die Schiebeschlitten 5 und die Spaten 11 mit Hilfe der Stellantriebe 6, 13 in die in Figur 1 dargestellte offene Lage gebracht. Dabei sind die Spaten 11 um einen Abstand a voneinander entfernt, der mindestens dem Durchmesser D des Stammes vom Baum 2 oder Strauch entspricht. Anschließend wird die Vorrichtung 1, die vorzugsweise an einem Bagger, Lader oder Bobcat gehalten ist, derart manövriert, daß sich der zu verpflanzende Baum 2 oder Strauch mittig zwischen den beiden Spaten 11 befindet. Diese Situation ist in Figur 1 dargestellt.

Nun werden die beiden Spaten 11 durch Betätigung der Stellantriebe 6 aufeinander zuverschoben, bis ihr Abstand a nahezu Null wird. In dieser Lage ergänzen sich die Schneiden 16 beider Spaten 11 zu einem im wesentlichen geschlossenen Kreis, in dessen Mittelpunkt sich der Baum 2 oder Strauch befindet. Nun wird die Vorrichtung 1 durch Betätigung der Hydraulik des Baggers so weit abgesenkt, daß die Spaten 11 ca. 10 cm in den Boden 17 eindringen. Durch die Ausbildung der freien Enden 14 der Spaten 11 in Form von Schneiden 16 wird dieses Eindringen erleichtert, so daß vom Bagger nur eine verhältnismäßig geringe Druckkraft auf die Vorrichtung 1 ausgeübt werden muß. Dies ist insbesondere dann wichtig, wenn von den Spaten 11 Wurzeln des Baumes 2 durchtrennt werden müssen.

Nun werden die beiden Spaten 11 durch Betätigung der Stellantriebe 13 um die Schwenklager 12 verschwenkt. Dabei dringen die Schneiden 16 der Spaten 11 tiefer in den Boden ein und erzeugen einen im wesentlichen halbkugelförmigen Schnitt 18. Die Spaten 11 sind teilkugelförmig ausgebildet, wobei deren Kugelmittelpunkt auf der Schwenkachse des Schwenklagers 12 liegt. Dadurch ist gewährleistet, daß der Spaten 11 während seiner Schwenkbewegung der von den Schneiden 16 geschaffenen Schnittlinie 18 im Boden 17 folgt. Die Spaten 11 üben daher keinerlei seitlichen Druck- bzw. Zugkräfte auf den Boden 17 aus, was das Eindringen der Spaten 11 in den Boden 17 erleichtert.

In der Endlage der Spaten 11 überlappen sich die Schneiden 16 teilweise, so daß auch nach unten reichende Wurzeln des zu verpflanzenden Baumes 2 oder Strauches zuverlässig durchtrennt werden. In dieser geschlossenen Endlage ist der zu verpflanzende Baum 2 oder Strauch vollständig vom Boden 17 gelöst und kann durch Anheben der Vorrichtung 1 mittels des Baggers samt eines umliegenden, in etwa halbkugelförmigen Wurzelballens entnommen werden.

Anschließend wird der zu verpflanzende Baum 2 oder Strauch mit der Vorrichtung 1 an den neuen Pflanzort transportiert, an dem bereits eine entsprechende Pflanzgrube ausgehoben ist. In diese Pflanzgrube werden die Spaten 11 durch Absenken der Vorrichtung 1 eingebracht, wonach durch Betätigung der Stellantriebe 13 die Spaten 11 voneinander wegverschwenkt werden. Anschließend wird die Vorrichtung 1 vom Bagger angehoben und die Schiebeschlitten 5 durch Betätigung der Stellantriebe 6 auseinanderbewegt, so daß die Spaten 11 beidseits des Baumes 2 oder Strauches weggezogen werden können. Damit ist das Verpflanzen des Baumes 2 oder Strauches abgeschlossen.

Figur 2 zeigt eine räumliche Darstellung einer alternativen Ausführungsform des gesonderten Teils 15 mit der Schneide 16. Das gesonderte Teil 15 ist aus gehärtetem Stahl erstellt, damit die Schneide 16 eine entsprechend hohe Lebensdauer aufweist.

Das gesonderte Teil 15 besteht aus einem langen Streifen mit im wesentlichen trapezförmigen Querschnitt, wobei in Figur 2 nur ein kleiner Ausschnitt dieses Streifens dargestellt ist. Das gesonderte Teil 15 wird zur Anpassung an den Spaten 11 im Radius des Spatens 11 kreisförmig gebogen, was in Figur 2 nicht dargestellt ist. An der Schrägseite des trapezförmigen Querschnitts des gesonderten Teils 15 sind konkav gerundete Vertiefungen 20 vorgesehen, zwischen denen sich Erhöhungen 21 befinden. Die Vertiefung 20 weist eine konkave, kegelige Begrenzungsfläche 22 auf, deren innerer Radius R größer ist als der äußere, schneidenseitige Radius r. Auf diese Weise wird erreicht, daß die Erhöhungen 21 gekrümmte Kanten 23 aufweisen. Durch diese besondere Ausbildung der Schneide 16 in Form eines besonderen Wellenschliffes ergibt sich gegenüber der Ausführungsform gemäß Figur 1 ein noch geringerer Widerstand des Spatens 11 im Boden 17, wobei aufgrund der Erhöhungen 21 eine ausreichende Stabilität der Schneide 16 gewährleistet ist.

Figur 3 zeigt eine Schnittdarstellung durch einen Spaten 11 mit dem gesonderten Teil 15. Beide sind durch beidseitige Schweißnähte 24 miteinander verbunden, wobei die Schweißnähte 24 im wesentlichen bündig mit der Spateninnen- 25 und -außenfläche 26 abschließen. Dadurch wird verhindert, daß die Schweißnähte 24 einen erhöhten Widerstand auf den Spaten 11 beim Eindringen in den Boden 17 ausüben.

Aus der Figur 3 ist die Form der Schneide 16 mit der gekrümmten Kante 23 der Erhöhung 21 zu erkennen. Zur Vermeidung einer weit über die Schneide 16 überstehenden Zacke im Bereich der Erhöhung 23 weist das gesonderte Teil 15 einen Gegenschliff 27 auf, der im wesentlichen nur den Bereich der Erhöhungen 21 umfaßt.

In Figur 3 ist außerdem das gesonderte Teil 15 des gegenüberliegenden Spatens 11 strichliert angedeutet, wobei sich die Spaten 11 in der geschlossenen Lage befinden. Die beiden Schneiden 16 sind dabei einerseits außenseitig und andererseits innenseitig an den Spaten 11 vorgesehen, so daß sich die Schneiden 16 teilweise überlappen können. Um eine möglichst große Überlappung der Schneiden 16 sicherzustellen, sind die Erhöhungen 21 der Schneiden 16 zueinander versetzt, so daß die Erhöhung 21 des einen Spatens 11 in etwa in die Vertiefung 20 des anderen Spatens 11 greift.

Schließlich zeigt Figur 4 eine weitere alternative Befestigungsweise des gesonderten Teils 15 am Spaten 11. Die aneinanderstoßenden Stirnflächen 30, 31 des gesonderten Teils 15 und des Spatens 11 sind stufenförmig ausgebildet, wobei insbesondere eine Nut-Feder-Profilierung 32 beider Teile vorgesehen ist. Diese Nut-Feder-Profilierung sorgt für einen ausreichenden Halt des gesonderten Teils 15 am Spaten 11 gegenüber seitlichen Kräften, so daß an die Haltemittel zur Befestigung des gesonderten Teils 15 nur relativ geringe Anforderungen gestellt werden müssen. Insbesondere müssen diese Haltemittel lediglich geringen Zugkräften widerstehen. Im Ausführungsbeispiel gemäß Figur 4 wird vorgeschlagen, als Haltemittel 33 eine Senkkopfschraube einzusetzen, so daß die Verbindung zwischen dem Spaten 11 und dem gesonderten Teil 15 lösbar ausgebildet ist. Dies hat den besonderen Vorteil, daß beschädigte Schneiden 16 sehr leicht ausgewechselt werden können, so daß die Vorrichtung nach kurzer Reparaturzeit wieder einsatzfähig ist.

Im Gegensatz zur Figur 3 weist die Schneide 16 gemäß Figur 4 Vertiefungen 20 auf, die zylindrische Begrenzungsflächen 22 besitzen. Damit ergeben sich zwischen den Vertiefungen 20 gerade Kanten 23, die den gleichen Anstellwinkel wie die Vertiefungen 20 aufweisen.

### Bezugszeichenliste

- 1: Vorrichtung
- 2: Baum
- 3: Rahmen
- 4: Führung
- 5: Schiebeschlitten
- 6: Stellantrieb
- 7: Halterung
- 8: Tragrohr
- 9: Winkel
- 10: Ende des Winkels
- 11: Spaten
- 12: Schwenklager
- 13: Stellantrieb
- 14: freies Ende des Spatens
- 15: gesondertes Teil
- 16: Schneide
- 17: Boden
- 18: Schnitt
- 20: Vertiefung
- 21: Erhöhung
- 22: konkave Begrenzungsfläche
- 23: Kante der Erhöhung
- 24: Schweißnaht
- 25: Spateninnenfläche
- 26: Spatenaußenfläche
- 27: Gegenschliff
- 30,31: Stirnfläche
- 32: Nut-Feder-Profilierung
- 33: Haltemittel
- a: Abstand der Spaten
- D: Durchmesser des Baumes
- R: innerer Radius
- r: äußerer Radius

## Patentansprüche

1. Vorrichtung zum Verpflanzen von Bäumen (2)oder Sträuchern, wobei die Vorrichtung (1) mindestens zwei gegeneinander verstellbare Spaten (11) aufweist, die in eine offene Lage bringbar sind, in der sie zumindest um den Durchmesser (D) des Baumstammes voneinander beabstandet sind und nach unten gerichtete, mit Schliffflächen (22) versehene Schneiden (16) aufweisen, wobei die Spaten (11) von mindestens einem Stellantrieb (6, 13) in eine geschlossene Lage verstellbar sind, in der sie sich im wesentlichen zu einer Teilkugelschale ergänzen, **dadurch gekennzeichnet, daß** mindestens eine der Schliffflächen (22) abwechselnde, von konkaven zylinder- oder kegelförmigen Begrenzungsflächen (22) gebildete, wellenschliffartige Vertiefungen (20) und Kanten (23) bildende Erhöhungen (21) aufweist.

2. Vorrichtung nach Anspruch 1 oder nach dem Oberbegriff des Anspruchs 1, **dadurch gekennzeichnet, daß** die Schliffflächen (22) aneinandergrenzender Spaten (11) einerseits innenseitig und andererseits außenseitig am Spaten (11) vorgesehen sind und sich in der geschlossenen Lage wenigstens teilweise überlappen.

3. Vorrichtung nach Anspruch 1 oder 2, **dadurch gekennzeichnet, daß** die Erhöhungen (21) der Schneide (16) endseitig durch einen Gegenschliff (27)gekappt sind.

4. Vorrichtung nach mindestens einem der Ansprüche 1 bis 3, **dadurch gekennzeichnet, daß** die Erhöhungen (21) einander gegenüberliegender Schneiden (16) in der geschlossenen Lage der Spaten (11) versetzt zueinander angeordnet sind.

5. Vorrichtung nach mindestens einem der Ansprüche 1 bis 4, **dadurch gekennzeichnet, daß** die Erhöhungen (21) der Schneide (16) einen gegenseitigen Abstand zwischen 15 mm und 60 mm, vorzugsweise um 30 mm aufweisen.

6. Vorrichtung nach mindestens einem der Ansprüche 1 bis 5, **dadurch gekennzeichnet, daß** am Spaten (11) mindestens ein gesondertes mit der Schneide (16) versehenes Teil (15) gehalten ist, das gegenüber dem Spaten (11) eine größere Härte aufweist.

7. Vorrichtung nach Anspruch 6, **dadurch gekennzeichnet, daß** das gesonderte Teil (15) am Spaten (11) stirnseitig festgeschweißt ist.

8. Vorrichtung nach Anspruch 6 oder 7, **dadurch gekennzeichnet, daß** das gesonderte Teil (15) an der der Schneide (16) gegenüberliegenden Stirnfläche (31) stufenförmig ausgebildet ist, wobei die daran anliegende Stirnfläche (30) des Spatens (11) korrespondierend hierzu ausgebildet ist.

9. Vorrichtung nach Anspruch 6 oder 8, **dadurch gekennzeichnet, daß** das gesonderte Teil (15) durch Haltemittel (33) lösbar mit dem Spaten (11) verbunden ist.

10. Vorrichtung nach mindestens einem der Ansprüche 6 bis 9, **dadurch gekennzeichnet, daß** mehrere mit Schneiden (16) versehene Teile (15) segmentartig an der Stirnfläche des Spatens (11) vorgesehen sind.

## Claims

1. Apparatus for transplanting trees (2) or bushes, the apparatus (1) having at least two spades (11) which can be adjusted in relation to one another and can be moved into an open position, in which they are spaced apart from one another at least by the diameter (D) of the tree trunk or stem and have downwardly directed cutting edges (16) provided with ground surfaces (22), it being possible for the spades (11) to be adjusted, by at least one actuating drive (6, 13), into a closed position, in which they supplement one another to form essentially part of a spherical shell, **characterized in that** at least one of a ground surfaces (22) has alternating elevations (21) which are formed by concave cylindrical or conical boundary surfaces (22) and form edges (23) and depressions (20) which are ground in a corrugated manner.

2. Apparatus according to Claim 1 or according to the preamble of Claim 1, **characterized in that** the ground surfaces (22) of adjacent spades (11) are provided on the spade (11), on the one hand, on the inside and, on the other hand, on the outside and at least partially overlap in the closed position.

3. Apparatus according to Claim 1 or 2, **characterized in that** the elevations (21) of the cutting edge (16) are cut off at the end by an oppositely directed ground finish (27).

4. Apparatus according to at least one of Claims 1 to 3, **characterized in that** the elevations (21) of mutually opposite cutting edges (16) are offset to one another in the closed position of the spades (11).

5. Apparatus according to at least one of Claims 1 to 4, **characterized in that** the elevations (21) of the cutting edge (16) are spaced apart by a distance of between 15 mm and 60 mm, preferably by 30 mm.

6. Apparatus according to at least one of Claims 1 to 5, **characterized in that** at least one separate part (15), which is provided with the cutting edge (16) and has a greater hardness than the spade (11), is retained on the spade (11).

7. Apparatus according to Claim 6, **characterized in that** the separate part (15) is firmly welded on the end side of the spade (11).

8. Apparatus according to Claim 6 or 7, **characterized in that** the separate part (15), on the end surface (31) located opposite the cutting edge (16), is of step-like design, the abutting end surface (30) of the spade (11) being of corresponding design.

9. Apparatus according to Claim 6 or 8, **characterized in that** the separate part (15) is connected releasably to the spade (11) by retaining means (33).

10. Apparatus according to at least one of Claims 6 to 9, **characterized in that** a plurality of parts (15), which are provided with cutting edges (16), are arranged in the manner of segments on the end surface of the spade (11).

## Revendications

1. Dispositif pour transplanter des arbres (2) ou des arbustes, le dispositif (1) présentant au moins deux bêches (11) déplaçables l'une par rapport à l'autre, qui peuvent être amenées dans une position ouverte dans laquelle elles sont distantes l'une de l'autre d'au moins le diamètre (D) du tronc d'arbre, et présentent des lames (16) dirigées vers le bas, munies de surfaces polies (22), les bêches (11) pouvant être déplacées par au moins un servomoteur (6, 13) dans une position fermée, dans laquelle elles se complètent sensiblement en une coque partielle sphérique, **caractérisé en ce qu'**au moins l'une des surfaces polies (22) présente en alternance des creux (20) en forme de tranchant ondulé, formés par des surfaces de délimitation concaves (22) cylindriques ou coniques, et des bosses (21) formant des arêtes (23).

2. Dispositif suivant la revendication 1 ou suivant le préambule de la revendication 1, **caractérisé en ce que** les surfaces polies (22) de bêches (11) adjacentes sont prévues d'un côté sur le côté intérieur et d'un autre côté sur le côté extérieur de la bêche (11), et se chevauchent au moins en partie dans la position fermée.

3. Dispositif suivant l'une des revendications 1 et 2, **caractérisé en ce que** les bosses (21) de la lame (16) sont écourtées du côté extrême par un contre-tranchant (27).

4. Dispositif suivant l'une au moins des revendications 1 à 3, **caractérisé en ce que** les bosses (21) de lames (16) mutuellement en vis-à-vis sont disposées en déport mutuel dans la position fermée des bêches (11).

5. Dispositif suivant l'une au moins des revendications 1 à 4, **caractérisé en ce que** les bosses (21) de la lame (16) présentent un écartement mutuel compris entre 15 mm et 60 mm, de préférence de 30 mm.

6. Dispositif suivant l'une au moins des revendications 1 à 5, **caractérisé en ce qu'**au moins une partie séparée (15), munie de la lame (16), est maintenue sur la bêche (11), cette partie présentant une dureté supérieure à celle de la bêche (11).

7. Dispositif suivant la revendication 6, **caractérisé en ce que** la partie séparée (15) est soudée du côté frontal sur la bêche (11).

8. Dispositif suivant l'une des revendications 6 et 7, **caractérisé en ce que** la partie séparée (15) a une configuration étagée sur la surface frontale (31) opposée à la lame (16), la surface frontale (30) de la bêche (11) qui s'y applique ayant une configuration correspondante.

9. Dispositif suivant l'une des revendications 6 et 8, **caractérisé en ce que** la partie séparée (15) est assemblée de façon amovible avec la bêche (11) par des moyens de retenue (33).

10. Dispositif suivant l'une au moins des revendications 6 à 9, **caractérisé en ce que** plusieurs parties (15) munies de lames (16) sont prévues à la manière de segments sur la surface frontale de la bêche (11).
